# EUROPEAN PATENT APPLICATION

(11) **EP 3 079 039 A1**
(43) Date of publication of application: **12.10.2016**
(21) Application number: 16157944.6
(22) Date of filing: 29.02.2016
(51) Int. Cl.: G06F 1/32, G06F 3/0481

(54) **DISPLAY APPARATUS AND DISPLAY METHOD**

(30) Priority: 08.04.2015 KR 20150049951
(71) Applicant: Samsung Electronics Co., Ltd., Gyeonggi-do 16677 (KR)
(72) Inventor: SON, Ho-yong, Gyeonggi-do (KR)
(74) Representative: Taor, Simon Edward William

(57) **Abstract**

A display apparatus and a display method according to example embodiments are disclosed. The display apparatus according to an example embodiment includes a display and a processor configured to provide, on the display, a user interface for changing a configuration of a power saving mode such that the display apparatus consumes predefined power in a low-power mode, based on a low-power mode entering history of the display apparatus.

## Description

The disclosure relates to methods and apparatuses for a display apparatus and a display method, and for example, to a display apparatus having a power saving mode and a display method therefor.

Display apparatuses have a function of providing an image to a user. Also, the display apparatuses further provide various functions for convenience of the user. According to the provision of high-resolution images and an increase in functions for user convenience in display apparatuses, the display apparatuses need much electric power.

A display apparatus may enter a low-power mode when an input of a user is not received for a certain time in order to reduce power consumption. In the low-power mode, the display apparatus may be controlled so as to operate only minimum functions.

A display apparatus capable of offering a user an option of power consumption of the display apparatus being reduced or the display apparatus being quickly turned on and a display method therefor are provided.

Additional aspects will be set forth in part in the description which follows and, in part, will be apparent from the description.

According to an aspect of an example embodiment, a display apparatus includes: a display; and a processor configured to provide, on the display, a user interface for changing a configuration of a power saving mode wherein the display apparatus consumes predefined power in a low-power mode, based on a low-power mode entering history of the display apparatus.

The processor may be further configured to provide the user interface based on at least one of: the number of times the display apparatus entered the low-power mode, and a total time for which the low-power mode continued for a first time period.

The processor may be further configured to control the display apparatus to display a message providing an option to change the configuration of the power saving mode on the user interface based on a current configuration of the power saving mode of the display apparatus.

The processor may be further configured to control the display apparatus to display the user interface at a point in time corresponding to at least one of: when the display apparatus is released from the low-power mode and when the display apparatus is turned on.

The processor may be further configured to control the display apparatus to display, through the user interface, a message providing an option to change the configuration of the power saving mode to on if the configuration of the power saving mode is off and if the number of times the display apparatus entered the low-power mode during the first time period is less than a preset number of times.

The processor may be further configured to control the display apparatus to display, through the user interface, a message providing an option to change the configuration of the power saving mode to off if the configuration of the power saving mode is on and if the number of times the display apparatus entered the low-power mode during the first time period is the preset number of times or more.

The processor may be further configured to control the display apparatus to display, through the user interface, a message providing an option to change the configuration of the power saving mode to on if the configuration of the power saving mode is off and if the time for which the low-power mode continued during the first time period is a preset time or more.

The processor may be further configured to control the display apparatus to display, through the user interface, a message providing an option to change the configuration of the power saving mode to off if the configuration of the power saving mode is on and if the time for which the low-power mode continued during the first time period is less than the preset time.

The user interface may be configured to provide a selectable item for receiving an input for changing the configuration of the power saving mode and a selectable item for receiving an input for maintaining the configuration of the power saving mode.

The processor may be further configured to control the display apparatus to change a duration in which the low-power mode entering history is collected, based on the input for maintaining the configuration of the power saving mode.

According to an aspect of another example embodiment, a display method includes: acquiring a low-power mode entering history of a display apparatus; and providing, on a display, a user interface for changing a configuration of a power saving mode wherein the display apparatus consumes predefined power in a low-power mode, based on the low-power mode entering history.

The providing of the user interface may include providing the user interface based on at least one of: the number of times the display apparatus entered the low-power mode, and a total time for which the low-power mode continued during a first duration.

The providing of the user interface may include controlling the display apparatus to display a message providing an option to change the configuration of the power saving mode on the user interface based on a current configuration of the power saving mode of the display apparatus.

The providing of the user interface may include providing the user interface at a point in time corresponding to at least one of: when the display apparatus is released from the low-power mode, and when the display apparatus is turned on.

The providing of the user interface may include displaying, through the user interface, a message providing an option to change the configuration of the power saving mode to on if the configuration of the power saving mode is off and if the number of times the display apparatus entered the low-power mode during the first time period is less than a preset number of times.

The providing of the user interface may include displaying, through the user interface, a message providing an option to change the configuration of the power saving mode to off if the configuration of the power saving mode is on and if the number of times the display apparatus entered the low-power mode during the first time period is the preset number of times or more.

The providing of the user interface may include displaying, through the user interface, a message providing an option to change the configuration of the power saving mode to on if the configuration of the power saving mode is off and if the time for which the low-power mode continued during the first time period is a preset time or more.

The providing of the user interface may include displaying, through the user interface, a message providing an option to change the configuration of the power saving mode to off if the configuration of the power saving mode is on and if the time for which the low-power mode continued during the first time period is less than the preset time.

The providing of the user interface may include providing a selectable item for receiving an input for changing the configuration of the power saving mode and a selectable item for receiving an input for maintaining the configuration of the power saving mode.

The display method may further include changing a duration in which the low-power mode entering history is collected, based on the input for maintaining the configuration of the power saving mode.

These and/or other aspects will become apparent and more readily appreciated from the following detailed description, taken in conjunction with the accompanying drawings, in which like reference numerals refer to like elements, and wherein:
FIG. 1A illustrates an example display apparatus;
FIG. 1B illustrates an example display apparatus;
FIG. 1C illustrates an example display apparatus;
FIG. 2 is a block diagram illustrating an example display apparatus;
FIG. 3 is a more detailed block diagram illustrating an example display apparatus;
FIG. 4 is a flowchart illustrating an example method of operating the display apparatus;
FIG. 5A is a diagram illustrating a state in which the example display apparatus enters a low-power mode;
FIG. 5B is a diagram illustrating an example display apparatus providing a user interface;
FIG. 5C is a diagram illustrating an example display apparatus providing a user interface;
FIG. 6 is a flowchart illustrating an exampmle method of operating the display apparatus providing a user interface based on the number of times the display apparatus entered the low-power mode;
FIG. 7A is a diagram illustrating an example display apparatus providing a user interface based on the number of times the display apparatus entered the low-power mode;
FIG. 7B is a diagram illustrating an example display apparatus providing a user interface based on the number of times the display apparatus entered the low-power mode;
FIG. 8 is a flowchart illustrating an example method of operating the display apparatus providing a user interface based on a time for which the low-power mode continued;
FIG. 9A is a diagram illustrating an example display apparatus providing a user interface based on a time for which the low-power mode continued;
FIG. 9B is a diagram illustrating an example display apparatus providing a user interface based on a time for which the low-power mode continued;
FIG. 10 is a flowchart illustrating an example method of operating the display apparatus providing a user interface;
FIGS. 11A through 11C are diagrams illustrating an example display apparatus providing a user interface based on a time for which the low-power mode continued;
FIG. 12 is a time table illustrating an example display apparatus automatically changing a configuration of a power saving mode based on a time band for which the power saving mode continued; and
FIGS. 13A through 13C are diagrams illustrating an example display apparatus providing a user interface for changing a configuration of the power saving mode.

Example embodiments will be described more fully hereinafter with reference to the accompanying drawings. A method of configuring and using an electronic apparatus according to example embodiments will be described more fully hereinafter with reference to the accompanying drawings. The same reference numerals in the drawings denote the same components or elements that perform the same functions.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items. Expressions such as "at least one of," when preceding a list of elements, modify the entire list of elements and do not necessarily modify the individual elements of the list.

The terminology used herein is for the purpose of describing example embodiments only and is not intended to be limiting of example embodiments. As used herein, the singular forms "a", "an", and "the" are intended to include the plural forms as well, unless the context clearly indicates otherwise. It will be further understood that the terms "comprises", "comprising", "includes", and/or "including", when used herein, specify the presence of stated features, integers, steps, operations, elements, components, and/or groups thereof but do not preclude the presence or addition of one or more other features, integers, steps, operations, elements, components, and/or groups thereof.

In the disclosure, the term "display" may indicate a component having a function of visually outputting image data. Also, when a display panel and a touch pad included in a display form a touch screen with a layer structure according to an implementation example, the display may also be used as an input apparatus besides an output apparatus. The display may include at least one of a liquid crystal display (LCD), a thin film transistor-liquid crystal display, an organic light-emitting diode (OLED), a flexible display, a three-dimensional (3D) display, an electrophoretic display, and a plasma display panel (PDP), or the like.

In the disclosure, the term "screen" may indicate a part of the display which is viewed by a user and on which an image is actually displayed.

In the disclosure, the term "user" may, for example refer to a person who controls a function or an operation of a display apparatus and may include, for example, a manager or an installation engineer, or the like.

The term "display apparatus" may, for example, refer to an apparatus capable of visually outputting image data as one type of output apparatus. A display apparatus may, for example, be connected to a desktop computer, a laptop computer, a tablet personal computer (PC), a camera, a cellular phone, a storage medium, or other electronic apparatus and wirelessly or via wire receive image data. According to one or more example embodiments, the display apparatus may receive an analog broadcast signal and/or a digital broadcast signal. The display apparatus may, for example, be implemented as a flat display apparatus, a curved display apparatus having a curvature, or a flexible display apparatus of which a curvature is adjustable, or the like. The display apparatus may include a PC monitor, a TV monitor, a large format display (LFD), and the like. According to various example implementation forms, the display apparatus may include, for example, two or more displays.

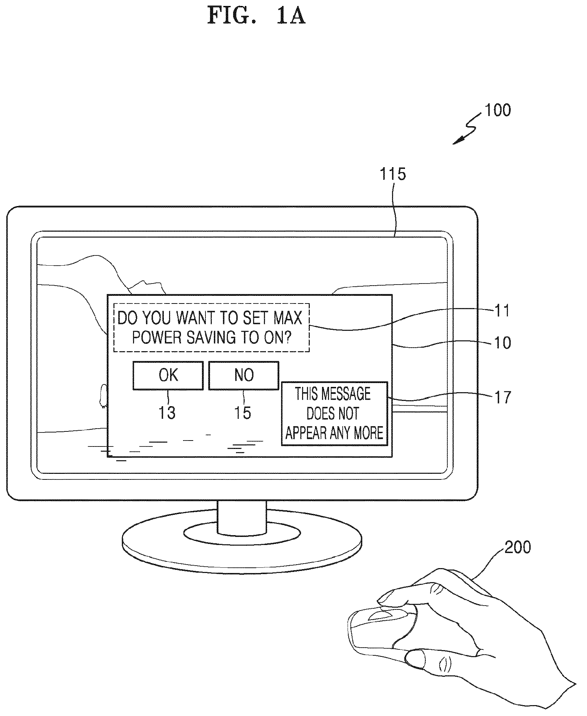

FIG. 1A is a diagram illustrating an example display apparatus 100.

Referring to FIG. 1A, the display apparatus 100 may include, for example, a PC monitor. The display apparatus 100 may, for example, be connected to a PC wirelessly or via a wire. The display apparatus 100 may include a PC.

The display apparatus 100 may provide a user interface 10 to a display 115. For example, the display apparatus 100 may provide, to a display 115, the user interface 10 for changing a configuration of a power saving mode, based on a low-power mode entering history of the display apparatus 100.

The power saving mode may be a mode in which the display apparatus 100 consumes predefined power in a low-power mode. The predefined power may include, for example, power for driving a sub-processor (not shown) of the display apparatus 100. The sub-processor of the display apparatus 100 may operate in the low-power mode and receive a signal for releasing the low-power mode. According to one or more example embodiments, the display apparatus 100 may drive other elements besides the sub-processor in the power saving mode.

The low-power mode may indicate a state in which at least a portion of power supplied to a display panel (not shown) of the display apparatus 100 is cut off. Compared with a normal mode, the display apparatus 100 may consume less power in the low-power mode. In the low-power mode, the display apparatus 100 may follow display power management signaling (DPMS). The DPMS is a standard established by Video Electronics Standards Association (VESA) to control display apparatuses.

In an example embodiment, the display apparatus 100 may be connected wirelessly or via a wire to a desktop computer, a laptop computer, a tablet PC, a camera, a cellular phone, a storage medium, a set-top box, or the like. When no signal is received for a preset time, the display apparatus 100 may enter the low-power mode.

Power consumed by the display apparatus 100 in the low-power mode may have various levels based on the standard of the DPMS. The power consumed by the display apparatus 100 in the low-power mode may vary based on a type of the display apparatus 100.

The low-power mode entering history may include, for example, at least one of the number of times the display apparatus 100 entered the low-power mode for a predefined time duration and a total time for which the low-power mode of the display apparatus 100 continued during the predefined time duration. A time duration for which a low-power mode entering and releasing history of the display apparatus 100 is acquired is referred to herein as a first duration, first time period, etc. For example, a length of the first duration may be one week, ten days, or the like and may vary according to one or more example embodiments.

The low-power mode entering history may include the number of times the display apparatus 100 maintained the low-power mode for a preset time or more during the first duration or first time period. The preset time may, for example, be three hours, five hours, or the like.

The display apparatus 100 may be configured such that the power saving mode is on or off in the low-power mode.

When the power saving mode is on, the display apparatus 100 may cut off power to be supplied to other parts except for the sub-processor.

For example, when the power saving mode is on, the display apparatus 100 may cut off power to be supplied to the display panel and power to be supplied to a main processor (not shown) of the display apparatus 100. The main processor may include a system on chip (SoC) in which a core (not shown) is combined with a graphic processing unit (GPU (not shown)). When the power saving mode is on, the display apparatus 100 may additionally cut off power to be supplied to a communication unit (not shown) for receiving a wired signal and/or a wireless signal from an external apparatus.

When the power saving mode is off, the display apparatus 100 may cut off power to be supplied to other parts except for the sub-processor and the main processor.

For example, when the power saving mode is off, the display apparatus 100 may cut off power to be supplied to the display panel. When the power saving mode is off, the display apparatus 100 may cut off power to be supplied to the communication unit for receiving a wired signal and/or a wireless signal from an external apparatus. However, when the power saving mode is off, the display apparatus 100 may supply power to a circuit for driving the sub-processor and the main processor.

For example, when the power saving mode is on, the display apparatus 100 may consume only predefined power in the low-power mode. When the power saving mode is off, the display apparatus 100 may consume power exceeding the predefined power.

The above-described parts to which power is supplied in the display apparatus 100 based on whether the power saving mode is on or off are only illustrative, and the parts may vary according to one or more example embodiments.

The display apparatus 100 shown in FIG. 1A may provide the user interface 10 at a point in time corresponding to when the display apparatus 100 is turned on. The display apparatus 100 may provide the user interface 10 at a point in time corresponding to when the display apparatus 100 is released from the low-power mode. The display apparatus 100 may provide the user interface 10 when a low-power mode entering history of a user satisfies a predefined condition. For example, the display apparatus 100 may provide the user interface 10 at a point in time when a time for which the display apparatus 100 maintained the low-power mode during the first duration is a preset time or more.

According to one or more example embodiments the display apparatus 100 may display the user interface 10 in a form of a popup window displayed on a screen.

The display apparatus 100 may be released from the low-power mode based on an input received, for example, through a control apparatus 200.

The control apparatus 200 may include, for example, a peripheral apparatus of the PC, such as a microphone, a wired mouse, a wireless mouse, or a keyboard, or the like. The control apparatus 200 may include, for example, a remote control for controlling the display apparatus 100 using short-range communication including infrared communication or Bluetooth communication, or the like. For example, referring to FIG. 1A, the control apparatus 200 may be a mouse, and the display apparatus 100 may be released from the low-power mode based on an input of the user who controls the mouse. However, the mouse shown in FIG. 1A is only illustrative, and the present example is not limited thereto.

For example, when the display 115 of the display apparatus 100 includes a touch screen, the display apparatus 100 may be released from the low-power mode based on a touch input. As another example, when the display apparatus 100 includes a microphone (not shown) capable of receiving a voice of the user, the display apparatus 100 may be released from the low-power mode based on a received voice signal. As another example, when the display apparatus 100 includes a sensor (not shown) capable of recognizing a motion, the display apparatus 100 may be released from the low-power mode based on a motion input received from the sensor.

Referring to FIG. 1A, the display apparatus 100 may provide the user interface 10 including a message 11 providing an option to change a configuration of the power saving mode based on a current configuration of the power saving mode of the display apparatus 100. The display apparatus 100 may provide, through the user interface 10, an item 13 for receiving an input for changing the configuration of the power saving mode. The display apparatus 100 may provide, through the user interface 10, an item 15 for receiving an input for maintaining the configuration of the power saving mode. Also, the display apparatus 100 may provide, through the user interface 10, an item 17 for receiving an input for not providing the user interface 10.

When the display apparatus 100 receives the input for not providing the user interface 10, the display apparatus 100 may not display the user interface 10 providing an option to change the configuration of the power saving mode based on a current configuration of the power saving mode of the display apparatus 100. In this case, the display apparatus 100 may automatically change the configuration of the power saving mode based on a time band in which the low-power mode continued.

The user may select the item 13,15, or 17 through a user input unit (not shown) of the display apparatus 100. For example, the user may select the item 13,15, or 17 through an action of pushing a hard key button placed at a lower end of the display apparatus 100. The user may select the item 13,15, or 17 through an action of touching a touch pad (not shown). The display apparatus 100 may include a different type of user input unit depending on one or more example embodiments.

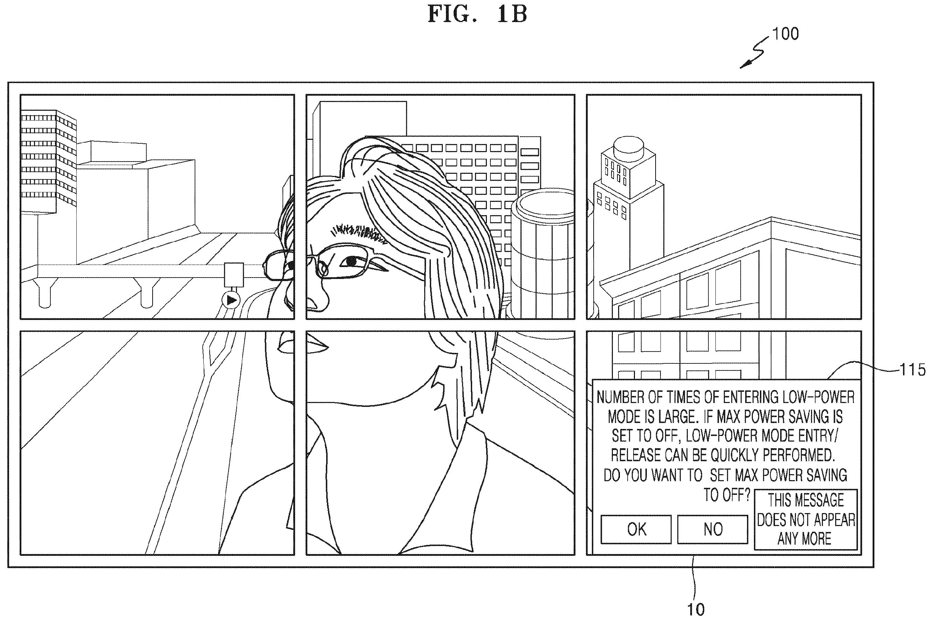

FIG. 1B is a diagram illustrating an example display apparatus 100.

As illustrated in FIG. 1B, the display apparatus 100 may include, for example, an LFD. The display apparatus 100 may include, for example, two or more displays 115 according to one or more example embodiments.

The display apparatus 100 may provide the user interface 10 to at least one of a plurality of displays 115. For example, the display apparatus 100 may provide the user interface 10 for changing a configuration of the power saving mode to at least one display 115 based on a low-power mode entering history of the display apparatus 100.

In an example embodiment, the display apparatus 100 may be connected wirelessly or via a wire to a desktop computer, a server, a storage medium, a set-top box, or the like. When no signal is received for a preset time, the display apparatus 100 may enter the low-power mode.

FIG. 1B illustrates that the display apparatus 100 provides the user interface 10 to a display 115 placed at a right lower end. However, this is only illustrative, and the example is not limited thereto.

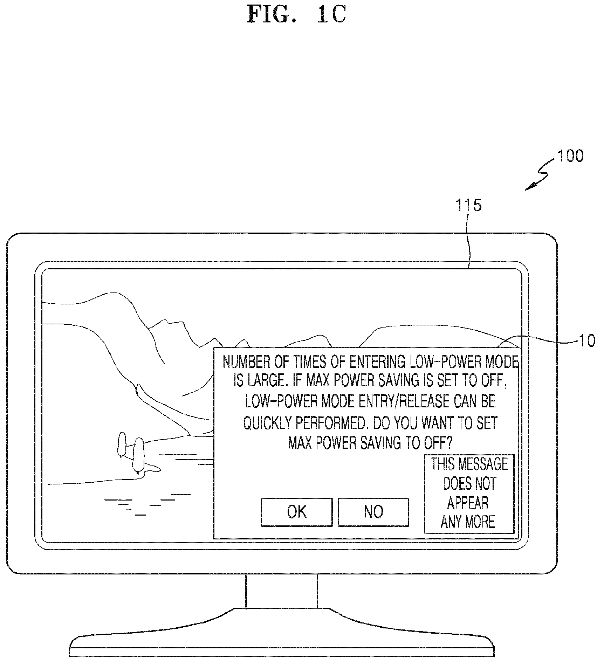

FIG. 1C is a diagram illustrating an example display apparatus 100.

As illustrated in FIG. 1C, the display apparatus 100 may include, for example, a TV monitor capable of receiving broadcast. The display apparatus 100 may include a tuner unit (not shown) for receiving broadcast. The display apparatus 100 may be implemented as a flat display apparatus, a curved display apparatus having a curvature, or a flexible display apparatus of which a curvature is adjustable, or the like. Examples of an output resolution of the display apparatus 100 may include, for example, high definition (HD), Full HD, Ultra HD, and a resolution clearer than Ultra HD.

The display apparatus 100 may provide the user interface 10 to the display 115. For example, the display apparatus 100 may provide the user interface 10 for changing a configuration of the power saving mode to the display 115 based on a low-power mode entering history of the display apparatus 100.

In an example embodiment, the display apparatus 100 may be electrically connected to a separate external apparatus (e.g., a set-top box (not shown)) having a tuner unit. When no signal is received for a preset time, the display apparatus 100 may enter the low-power mode.

FIG. 1C illustrates that the display apparatus 100 provides the user interface 10 to a right lower end. However, this is only illustrative, and the example is not limited thereto.

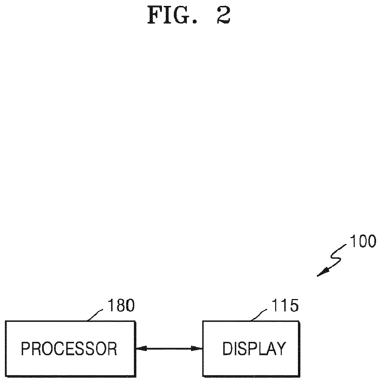

FIG. 2 is a block diagram illustrating an example display apparatus 100.

Referring to FIG. 2, the display apparatus 100 includes, for example, a processor 180 and the display 115.

The display 115 according to an example embodiment may display, on a screen under control of the processor 180, a user interface for changing a configuration of the power saving mode such that the display apparatus 100 consumes predefined power in the low-power mode, based on a low-power mode entering history of the display apparatus 100.

The display 115 according to an example embodiment may provide, under control of the processor 180, the user interface based on at least one of the number of times the display apparatus 100 entered the low-power mode and a total time for which the low-power mode continued during a first duration.

The display 115 according to an example embodiment may provide, under control of the processor 180, the user interface based on the number of times the display apparatus 100 maintained the low-power mode for a preset time or more during the first duration or first time period.

The display 115 according to an example embodiment may display, under control of the processor 180, a message providing an option to change the configuration of the power saving mode on the user interface based on a current configuration of the power saving mode of the display apparatus 100.

The display 115 according to an example embodiment may display, under control of the processor 180, the user interface at a point in time corresponding to at least one of when the display apparatus 100 is released from the low-power mode and when the display apparatus 100 is turned on.

The display 115 according to an example embodiment may display, through the user interface under control of the processor 180, a message providing an option to change the configuration of the power saving mode to on if the configuration of the power saving mode is off and the number of times the display apparatus 100 entered the low-power mode during the first duration is less than a preset number of times.

The display 115 according to an example embodiment may display, through the user interface under control of the processor 180, a message providing an option to change the configuration of the power saving mode to off if the configuration of the power saving mode is on and the number of times the display apparatus 100 entered the low-power mode during the first duration or first time period is the preset number of times or more.

The display 115 according to an example embodiment may display, through the user interface under control of the processor 180, a message providing an option to change the configuration of the power saving mode to on if the configuration of the power saving mode is off and the time for which the low-power mode continued during the first duration or first time period is a preset time or more.

The display 115 according to an example embodiment may display, through the user interface under control of the processor 180, a message providing an option to change the configuration of the power saving mode to off if the configuration of the power saving mode is on and the time for which the low-power mode continued during the first duration or first time period is less than the preset time.

The display 115 according to an example embodiment may provide, through the user interface under control of the processor 180, an item (e.g., a button) for receiving an input for changing the configuration of the power saving mode and an item for receiving an input for maintaining the configuration of the power saving mode.

The processor 180 according to an example embodiment may be configured control the display apparatus 100 to change a duration in which the low-power mode entering history is collected, based on the input for maintaining the configuration of the power saving mode.

The processor 180 according to an example embodiment may include a processor (not shown) including a main processor and a sub-processor. The main processor may include an SoC in which a core (not shown) is combined with a GPU (not shown). The sub-processor may operate in the low-power mode and receive a signal for releasing the low-power mode.

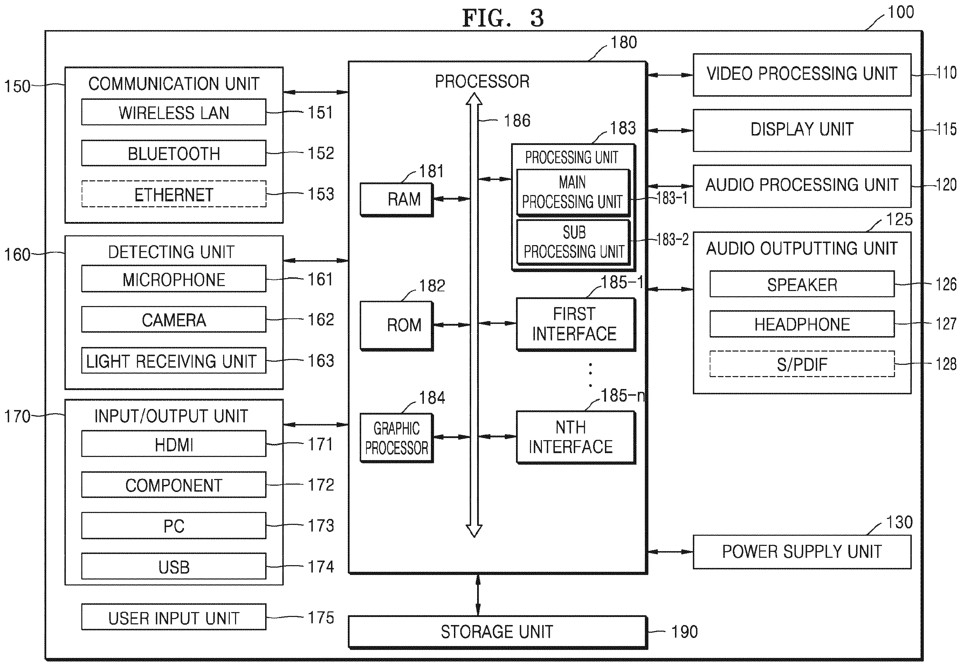

FIG. 3 is a more detailed block diagram illustrating an example display apparatus 100.

Referring to FIG. 3, the display apparatus 100 includes a video processing unit (e.g., including a video processor or processing circuitry) 110, the display 115, an audio processing unit (e.g., including an audio processor or processing circuitry) 120, an audio output unit 125, a power supply unit 130, a communication unit (e.g., including communication circuitry) 150, a detection unit (e.g., including detection circuitry) 160, an input/output unit 170, a user input unit (e.g., including input circuitry) 175, the processor 180, and a storage unit 190.

The video processing unit 110 processes video data that is received by the display apparatus 100. The video processing unit 110 may, for example, perform various image processing such as decoding, scaling, noise filtering, frame rate conversion, or resolution conversion on the video data, or the like.

The display 115 may display content (e.g., a video, an image, or the like) that is input through the communication unit 150 or the input/output unit 170 under control of the processor 180. The display 115 may output an image that is stored in the storage unit 190 under control of the processor 180. The display 115 may display a voice user interface (UI) (including a voice command guide) for performing a voice recognition task corresponding to voice recognition or a motion UI (including a user motion guide) for performing a motion recognition task corresponding to motion recognition, or the like.

The display 115 may display, on the screen under control of the processor 180, a user interface for changing a configuration of the power saving mode such that the display apparatus 100 consumes predefined power in the low-power mode, based on a low-power mode entering history of the display apparatus 100. The power saving mode may be a mode in which the display apparatus 100 consumes the predefined power in the low-power mode. The predefined power may include power for driving a sub-processing unit 183-2 of the display apparatus 100.

The display 115 according to an example embodiment may provide, under control of the processor 180, the user interface based on at least one of the number of times the display apparatus 100 entered the low-power mode and a total time for which the low-power mode continued during the first duration or first time period.

The display 115 according to an example embodiment may provide, under control of the processor 180, the user interface based on the number of times the display apparatus 100 maintained the low-power mode for a preset time or more during the first duration or first time period.

The display 115 according to an example embodiment may display, under control of the processor 180, a message providing an option to change the configuration of the power saving mode on the user interface based on a current configuration of the power saving mode of the display apparatus 100.

The display 115 according to an example embodiment may display, under control of the processor 180, the user interface at a point in time corresponding to at least one of when the display apparatus 100 is released from the low-power mode and when the display apparatus 100 is turned on.

The display 115 according to an example embodiment may display, under control of the processor 180, a message providing an option to change the configuration of the power saving mode to on through the user interface if the configuration of the power saving mode is off and the number of times the display apparatus 100 entered the low-power mode during the first duration or first time period is less than a preset number of times.

The display 115 according to an example embodiment may display, under control of the processor 180, a message providing an option to change the configuration of the power saving mode to off through the user interface if the configuration of the power saving mode is on and the number of times the display apparatus 100 entered the low-power mode during the first duration or first time period is the preset number of times or more.

The display 115 according to an example embodiment may display, under control of the processor 180, a message providing an option to change the configuration of the power saving mode to on through the user interface if the configuration of the power saving mode is off and the time for which the low-power mode continued during the first duration or first time period is a preset time or more.

The display 115 according to an example embodiment may display, under control of the processor 180, a message providing an option to change the configuration of the power saving mode to off through the user interface if the configuration of the power saving mode is on and the time for which the low-power mode continued during the first duration or first time period is less than the preset time.

The display 115 according to an example embodiment may provide, through the user interface under control of the processor 180, an item (e.g., a button or the like) for receiving an input for changing the configuration of the power saving mode and an item for receiving an input for maintaining the configuration of the power saving mode.

The audio processing unit 120 may be configured to process audio data. The audio processing unit 120 may perform various processing such as decoding, amplification, or noise filtering, or the like, on the audio data. The audio processing unit 120 may include a plurality of audio processing modules to process audios corresponding to a plurality of pieces of content.

The audio output unit 125 may output audio (e.g., a voice or a sound) that is input through the communication unit 150 or the input/output unit 170. The audio output unit 125 may output audio that is stored in the storage unit 190 under control of the processor 180. The audio output unit 125 may include at least one of a speaker 126, a headphone output terminal 127, and a Sony/Philips digital interface (S/PDIF) output terminal 128. The audio output unit 125 may include, for example, a combination of the speaker 126, the head phone output terminal 127, and the S/PDIF output terminal 128.

The power supply unit 130 supplies power that is input from an external power supply source to elements (i.e., 110 through 190) of the display apparatus 100 under control of the processor 180. The power supply unit 130 may supply power that is output from one or more batteries (not shown) provided in the display apparatus 100 to the elements 110 through 190 under control of the processor 180.

The communication unit 150 may connect the display apparatus 100 to an external apparatus (e.g., an audio apparatus) under control of the processor 180. The processor 180 may be configured to transmit/receive content to/from the external apparatus that is connected to the processor 180 through the communication unit 150, may be configured to download an application from the external apparatus, or may be configured to perform web browsing, or the like. The communication unit 150 may include, for example, one of a wireless local area network (WLAN) 151, a Bluetooth system 152, and a wired Ethernet system 153 based on a performance and a structure of the display apparatus 100. The communication unit 150 may include a combination of the WLAN 151, the Bluetooth system 152, and the wired Ethernet system 153. The communication unit 150 may receive a control signal of the control apparatus 200 under control of the processor 180. The control signal may be a Bluetooth signal, an RF signal, or a WiFi signal, or the like.

The communication unit 150 may further include a short-range communication system (e.g., a near-field communication (NFC) system (not shown) or a Bluetooth low energy (BLE) system (not shown)) other than the Bluetooth system 152.

The detection unit 160 may include circuitry that detects the user's voice, image, or interaction.

A microphone 161 receives the user's uttered voice. The microphone 161 may convert the received voice into an electrical signal and may output the electrical signal to the processor 180. The user's voice may include, for example, a voice corresponding to a menu or a function of the display apparatus 100. A recommended recognition range of the microphone 161 may, for example, be about 4 m between the microphone 161 and the user's position, and may vary based on the user's voice tone and an ambient environment (e.g., a speaker sound or an ambient noise).

The microphone 161 may be integrated into or separated from the display apparatus 100. When the microphone 161 is separated from the display apparatus 100, the microphone 161 may be electrically connected to the display apparatus 100 through the communication unit 150 or the input/output unit 170.

According to an example embodiment, the microphone 161 may receive a voice input for releasing the display apparatus 100 from the low-power mode.

It will be understood by those of ordinary skill in the art that the microphone 161 may be omitted based on a performance and a structure of the display apparatus 100.

A camera unit 162 receives an image (e.g., continuous frames) corresponding to the user's motion including a gesture in a recognition range. For example, the recognition range of the camera unit 162 may be 0.1 mm to 5 mm between the camera unit 162 and the user's position. The user's motion may include, for example, a motion of the user's body part or region such as the user's face, facial expression, hand, fist, or finger, or the like. The camera unit 162 may convert the received image into an electrical signal and may output the electrical signal to the processor 180 under control of the processor 180.

The processor 180 may be configured to select a menu displayed on the display apparatus 100 using a result of motion recognition or may be configured to perform control corresponding to the result of motion recognition. For example, the processor 180 may adjust a volume or move an indicator.

The camera unit 162 may include a lens (not show) and an image sensor (not shown). The camera unit 162 may support optical zooming or digital zooming using a plurality of lenses and image processing. The recognition range of the camera unit 162 may be set to vary based on an angle of a camera and an ambient environment condition. When the camera unit 162 includes a plurality of cameras, the camera unit 162 may receive 3D still images or 3D moving images by using the plurality of cameras.

The camera unit 162 may be integrated into or separated from the display apparatus 100. When the camera unit 162 is separated from the display apparatus 100, a separate apparatus (not shown) including the camera unit 152 may be electrically connected to the display apparatus 100 through the communication unit 150 or the input/output unit 170.

According to an example embodiment, the camera unit 162 may receive the user's motion input for releasing the display apparatus 100 from the low-power mode.

It will be understood by those of ordinary skill in the art that the camera unit 162 may be omitted based on a performance and a structure of the display apparatus 100.

A light-receiving unit 163 receives an optical signal (including a control signal) that is received from the control apparatus 200 that is outside the light-receiving unit 163 through a light window (not shown) or the like in a bezel of the display 115. The light-receiving unit 163 may receive an optical signal corresponding to the user's input (e.g., a touch, a push, a touch gesture, a voice, or a motion) from the control apparatus 200. The control signal may be extracted from the received optical signal under control of the processor 180.

According to an example embodiment, the light-receiving unit 163 may receive a signal of the control apparatus 200 to release the display apparatus 100 from the low-power mode.

It will be understood by those of ordinary skill in the art that the light-receiving unit 163 may be omitted based on a performance and a structure of the display apparatus 100.

The input/output unit 170 receives a video (e.g., a moving image), an audio (e.g., a voice or music), and additional information (e.g., an electronic program guide (EPG), or the like from the outside of the display apparatus 100 under control of the processor 180. The input/output unit 170 may include, for example, at least one of a high-definition multimedia interface (HDMI) port 171, a component jack 172, a PC port 173, and a USB port 174. The input/output unit 170 may further include at least one of a D-sub port, a digital visual interface (DVI) port, and a DP port according to one or more example embodiments.

It will be understood by those of ordinary skill in the art that the input/output unit 170 may be configured and operate in various ways according to one or more example embodiments.

The user input unit 175 may receive a command related to the display apparatus 100. For example, the user input unit 175 may receive an input for turning the display apparatus 100 on or off. The user input unit 175 may receive an input for setting an environment of the display apparatus 100.

The user input unit 175 may include, for example, a keypad, a button, a touch pad, a touch screen, or the like. When the user input unit 175 includes a hard key button, the user may input a command related to the display apparatus 100 through a push operation on the hard key button. When the user input unit 175 includes a touch screen, the user may input a command related to the display apparatus 100 by touching a soft key of the touch screen. The user input unit 175 may include various input means operable by the user, such as a scroll key or a jog key.

It will be understood by those of ordinary skill in the art that the user input unit 175 may be configured and operate in various ways according to one or more example embodiments.

The processor 180 is configured to control an overall operation of the display apparatus 100 and to control signal transmission/reception between the elements 110 through 190 of the display apparatus 100, and to processes data. When the user's input occurs or satisfies a condition that is preset and stored, the processor 180 may be configured to execute an operation system (OS) and various applications that are stored in the storage unit 190.

The processor 180 may include a random-access memory (RAM) 181 that stores a signal or data input from the outside of the display apparatus 100 or stores a signal or data related to various operations performed in the display apparatus 100, a read-only memory (ROM) 182 that stores a control program for controlling the display apparatus 100, and a processing unit 183.

The processing unit 183 may include a GPU (not shown) for performing graphics processing on a video. The processing unit 183 may be provided as an SoC in which a core (not shown) is combined with the GPU. The processing unit 183 may include a single-core, a dual-core, a triple-core, a quad-core, and a multiple core thereof.

The processing unit 183 may include a plurality of processors. For example, the processing unit 183 may include a main processing unit 183-1 and the sub- processing unit 183-2. The main processing unit 183-1 may, for example, function as the core and the GPU. The sub-processing unit 183-2 may operate in the low-power mode and receive a signal for releasing the low-power mode.

First through nth interfaces 185-1through 185-n are connected to the various elements described above. One of the first through nth interfaces 185-1through 185-n may, for example, be a network interface that is connected to an external apparatus through a network.

The RAM 181, the ROM 182, the processing unit 183, a graphic processor 184, and the first through nth interfaces 185-1through 185-n may be connected to one another via an internal bus 186.

The storage unit 190 may store various data, programs, or applications for driving and controlling the display apparatus 100 under control of the processor 180. The storage unit 190 may store signals or data that are input/output based on operations of the video processing unit 110, the display 115, the audio processing unit 120, the audio output unit 125, the power supply unit 130, the communication unit 150, the detection unit 160, the input/output unit 170, and the user input unit 175. The storage unit 190 may, for example, store a control program for controlling the display apparatus 100 and the processor 180, an application that is initially provided by a manufacturer or downloaded from the outside, a graphical user interface (GUI) related to the application, an object (e.g., an image, text, an icon, or a button) for providing the GUI, user information, a document, databases, or related data.

The term 'storage unit' according to an example embodiment may include, for example, the storage unit 190, the ROM 182 or the RAM 181 of the processor 180, or a memory card (e.g., a micro secure digital (SD) card or a universal serial bus (USB) memory (not shown)) that is mounted in the display apparatus 100. The storage unit 190 may include, for example, a nonvolatile memory, a volatile memory, a hard disk drive (HDD), or a solid-state drive (SSD).

The storage unit 190 may include, for example, a volume control module, a communication control module, a voice recognition module, a motion recognition module, a light reception module, a display control module, an audio control module, an external input control module, a power control module, a power supply control module of an external apparatus that is connected through wireless communication (e.g., Bluetooth), a voice database (DB), or a motion DB, or the like. The modules and the DBs of the storage unit 190 that are not shown may be configured as software for the display apparatus 100 to perform functions of volume control, communication control, voice recognition, motion recognition, light reception control, audio control, external input control, power control, and display control of controlling a cursor or a scrolled item to be displayed. The processor 180 may perform each function using the software that is stored in the storage unit 190.

The storage unit 190 may include, for example, a presentation module. The presentation module is a module for configuring a display screen. The presentation module may include, for example, a multimedia module for reproducing and outputting multimedia content and an UI rendering module for performing UI and graphics processing. The multimedia module may include a player module, a camcorder module, and a sound processing module. The multimedia module may reproduce a variety of multimedia content and may generate and reproduce an image and a sound. The UI rendering module may include an image composition module that combines images, a coordinate combination module that combines and generates coordinates on a screen on which an image is to be displayed, an X11 module that receives various events from hardware, and a 2D/3D UI toolkit that provides a tool for forming a 2D or 3D UI.

The storage unit 190 according to an example embodiment may store a user interface for changing a configuration of the power saving mode such that the display apparatus 100 consumes predefined power in the low-power mode.

The storage unit 190 according to an example embodiment may store a current configuration of the power saving mode.

The storage unit 190 according to an example embodiment may store a low-power mode entering history. For example, the storage unit 190 may store at least one of the number of times the display apparatus 100 entered the low-power mode, a total time for which the low-power mode continued, and the number of times the display apparatus 100 maintained the low-power mode for a preset time or more during the first duration or first time period.

The storage unit 190 according to an example embodiment may store a message providing an option to change a configuration of the power saving mode, the message to be displayed on the user interface of the display apparatus 100.

The storage unit 190 according to an example embodiment may store a duration in which a low-power mode entering history is collected.

The display apparatus 100 may be electrically connected to a separate external apparatus (e.g., a set-top box (not shown)) including a tuner unit. For example, it will be understood by those of ordinary skill in the art that the display apparatus 100 may be, but is not limited to, an analog TV, a digital TV, a 3D-TV, a smart TV, an LED TV, an OLED TV, a plasma TV, or a monitor, or the like in embodiments of the invention.

The display apparatus 100 may further include a sensor (e.g., an illumination sensor or a temperature sensor (not shown)) that detects an internal or external state of the display apparatus 100.

At least one element may be added to or omitted from the elements (e.g., 110 through 190) of the display apparatus 100 of FIG. 3 based on a performance of the display apparatus 100. It will be understood by those of ordinary skill in the art that positions of the elements (e.g., 110 through 190) may vary based on a performance or a structure of the display apparatus 100.

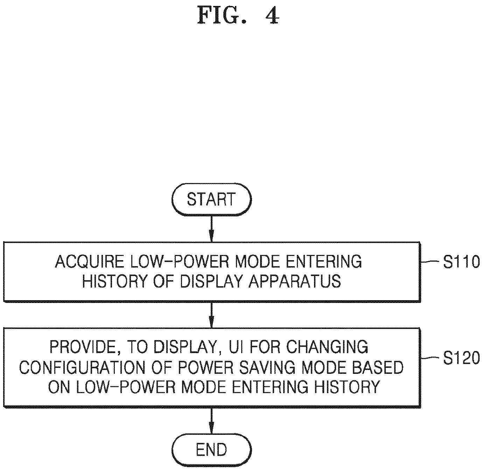

FIG. 4 is a flowchart illustrating an example method of operating the display apparatus 100.

In operation S110, the display apparatus 100 may acquire a low-power mode entering history of the display apparatus 100. The display apparatus 100 may acquire at least one of the number of times the display apparatus 100 entered the low-power mode, a total time for which the low-power mode continued, and the number of times the display apparatus 100 maintained the low-power mode for a preset time or more during the first duration or first time period.

In operation S120, the display apparatus 100 may provide a user interface for changing a configuration of the power saving mode based on the low-power mode entering history acquired in operation S110.

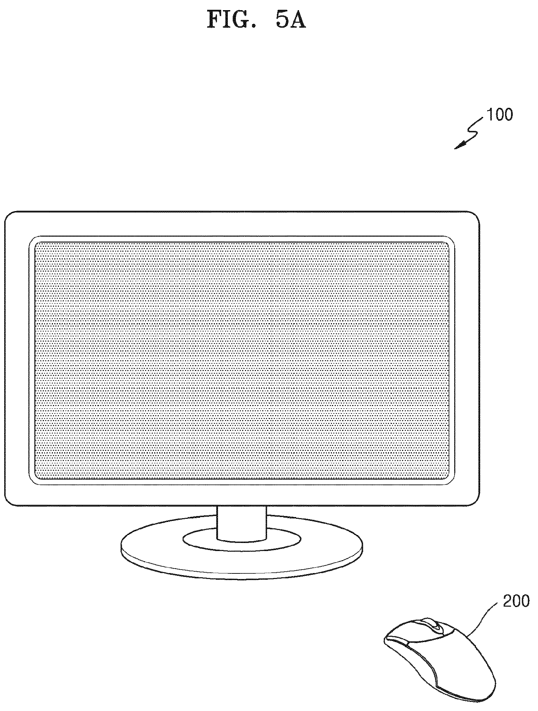

FIG. 5A is a diagram illustrating a state in which an example display apparatus 100 enters the low-power mode.

The display apparatus 100 may not display any image on the screen in the low-power mode. The display apparatus 100 may enter the low-power mode based on the DPMS standard of VESA.

When an analog signal is received using a D-sub port or the like, the display apparatus 100 may enter the low-power mode if each of a vertical frequency (H-sync) and a horizontal frequency (V-sync) of a display is a predefined frequency or less. Also, when a digital signal is received using an HDMI, DVI, or DP port or the like, the display apparatus 100 may enter the low-power mode in response to a clock of transmission minimized differential signaling (TMDS).

According to an example embodiment, the display apparatus 100 may enter the low-power mode if no signal is received via the HDMI, DVI, or DP port or the like for a preset time.

The display apparatus 100 in the low-power mode may be released from the low-power mode based on an input received via the control apparatus 200. The control apparatus 200 may include, for example, a peripheral apparatus of a PC, such as a microphone, a wired mouse, a wireless mouse, or a keyboard, or the like.

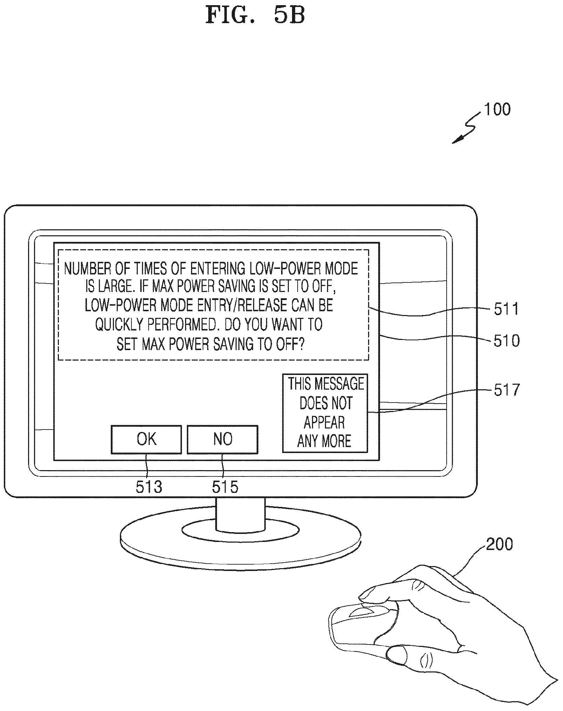

FIG. 5B is a diagram illustrating an example display apparatus 100 providing a user interface 510.

The display apparatus 100 may provide the user interface 510 including a message providing an option to change a configuration of the power saving mode based on a current configuration of the power saving mode of the display apparatus 100.

The display apparatus 100 may provide the user interface 510 to the screen as soon as the display apparatus 100 is released form the low-power mode based on an input received via the control apparatus 200.

When the configuration of the power saving mode is on, the display apparatus 100 may display a message 511 providing an option to change the configuration of the power saving mode to off through the user interface 510. For example, the display apparatus 100 may provide the message 511 based on at least one of the number of times the display apparatus 100 entered the low-power mode during the first duration or first time period and the number of times the display apparatus 100 maintained the low-power mode for a preset time during the first duration or first time period.

For example, in an example embodiment, the display apparatus 100 may set the first duration or first time period as one week. The display apparatus 100 may set the first duration or first time period as one, five, or ten days or the like. For example, the number of times the display apparatus 100 entered the low-power mode during the first duration or first time period (e.g., one week) may be 50. In this case, the display apparatus 100 may provide the message 511 "The number of times of entering the low-power mode is large. If Max power Saving is set to off, low-power mode entry/release can be quickly performed. Do you want to set Max power Saving to off?".

The display apparatus 100 may provide an item (e.g., a button) 513 for receiving an input for changing a configuration of the power saving mode, through the user interface 510. The display apparatus 100 may provide an item (e.g., a button) 515 for receiving an input for maintaining the configuration of the power saving mode, through the user interface 510. Also, the display apparatus 100 may provide an item (e.g., a button) 517 for receiving an input for not providing the user interface 510, through the user interface 510.

When the configuration of the power saving mode is on, the display apparatus 100 may set the power saving mode to off based on an input of selecting the item 513. When the power saving mode is off, the display apparatus 100 may not cut off power to be supplied to a sub-processor (not shown) and a main processor (not shown). When the power saving mode is off, a time taken for low-power mode entry/release of the display apparatus 100 may, for example, be 0.5 seconds or less.

The display apparatus 100 may receive an input of selecting the item 517. In this case, the display apparatus 100 may set or release the power saving mode without providing the user interface 510 if the number of times the display apparatus 100 entered the low-power mode satisfies a predefined condition.

If the number of times the display apparatus 100 entered and was released from the low-power mode is large, the user of the display apparatus 100 may set the power saving mode to off, thereby reducing a time taken for entry and release of the low-power mode.

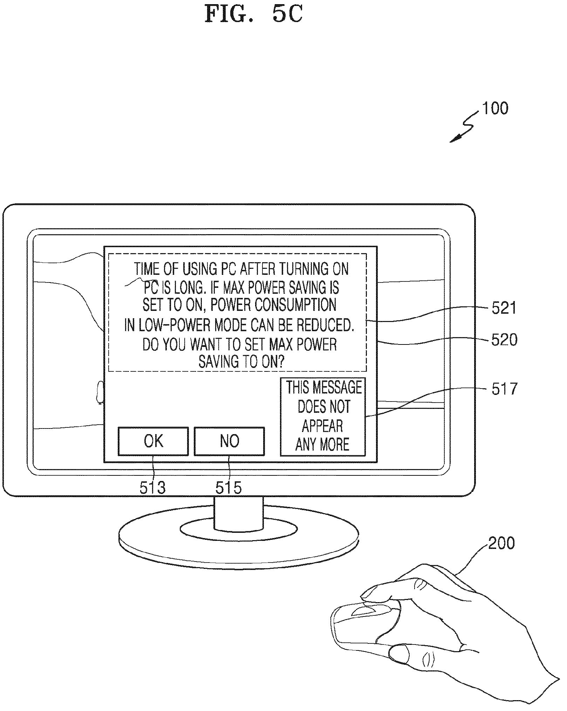

FIG. 5C is a diagram illustrating an example display apparatus 100 providing a user interface 520.

The display apparatus 100 may provide the user interface 520 including a message 521 providing an option to change a configuration of the power saving mode based on a current configuration of the power saving mode of the display apparatus 100.

The display apparatus 100 may provide the user interface 520 on the screen as soon as the display apparatus 100 is released from the low-power mode, based on an input received via the control apparatus 200.

When the configuration of the power saving mode is off, the display apparatus 100 may display, through the user interface 520, a message 521 providing an option to change the configuration of the power saving mode to on. For example, the display apparatus 100 may provide the message 521 based on the number of times the display apparatus 100 entered the low-power mode during the first duration or first time period. The display apparatus 100 may provide the message 521 based on the number of times the low-power mode continued for a preset time or more during the first duration or first time period.

For example, in an example embodiment, the display apparatus 100 may set the first duration or first time period as one week and set the preset time as five hours. The display apparatus 100 may, for example, be a PC monitor, the number of times the display apparatus 100 entered the low-power mode during the first duration or first time period (e.g., one week) may be 4, and the number of times the low-power mode continued for five hours or more may be 5. In this case, the display apparatus 100 may provide the message 520 "Time of using a PC after turning on the PC is long. If Max power Saving is set to on, power consumption in the low-power mode can be reduced. Do you want to set Max power Saving to on?".

The display apparatus 100 may provide the item 513 for receiving an input for changing the configuration of the power saving mode, through the user interface 520. The display apparatus 100 may provide the item 515 for receiving an input for maintaining the configuration of the power saving mode, through the user interface 520. The display apparatus 100 may provide the item 517 for receiving an input for not providing the user interface 520, through the user interface 520.

When the configuration of the power saving mode is off, the display apparatus 100 may set the power saving mode to on based on an input of selecting the item 513. When the power saving mode is on, the display apparatus 100 may cut off other power except for power to be supplied to a sub-processor (not shown). When the power saving mode is on, the display apparatus 100 may consume less power compared with when the power saving mode is off. When the power saving mode is on, a time taken for low-power mode entry/release of the display apparatus 100 may, for example, be about 6 to 10 seconds.

The display apparatus 100 may receive an input of selecting the item 517. In this case, the display apparatus 100 may set or release the power saving mode without providing the user interface 520 if the number of times the display apparatus 100 entered the low-power mode satisfies a predefined condition.

If the number of times the display apparatus 100 entered and was released from the low-power mode is small, and a time for which the low-power mode continued is long, the user of the display apparatus 100 may set the power saving mode to on, thereby reducing power consumption of the display apparatus 100.

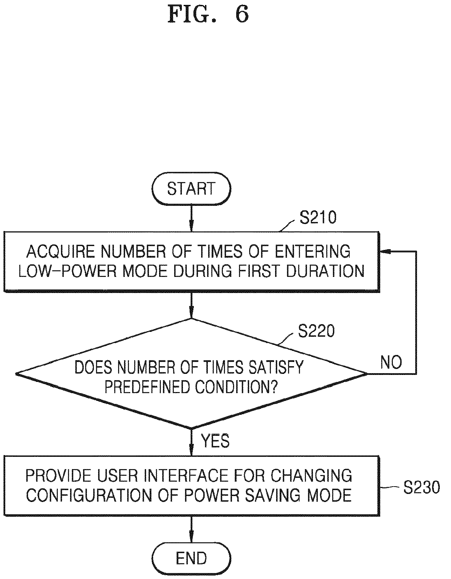

FIG. 6 is a flowchart illustrating an example method of operating the display apparatus 100 which provides a user interface based on the number of times the display apparatus 100 entered the low-power mode.

In operation S210, the display apparatus 100 may acquire the number of times the display apparatus 100 entered the low-power mode during the first duration or first time period. The display apparatus 100 may acquire the number of times the display apparatus 100 maintained the low-power mode for a preset time or more during the first duration in operation S210.

In operation S220, the display apparatus 100 may determine whether the number of times acquired in operation S210 satisfies a predefined condition.

The display apparatus 100 may determine that the acquired number of times satisfies the predefined condition in operation S220. In this case, in operation S230, the display apparatus 100 may provide a user interface for changing a configuration of the power saving mode.

Otherwise, the display apparatus 100 may determine that the acquired number of times does not satisfy the predefined condition in operation S220. In this case, in operation S210, the display apparatus 100 may reacquire the number of times the display apparatus 100 entered the low-power mode during the first duration.

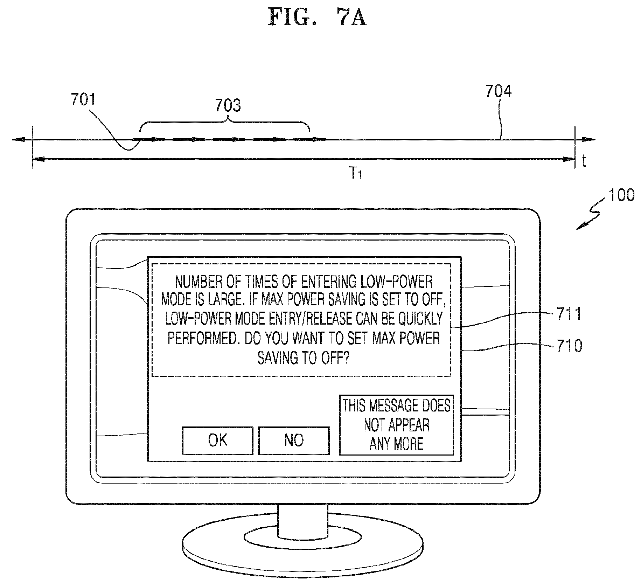

FIG. 7A is a diagram illustrating an example display apparatus 100 providing a user interface 710 based on the number of times the display apparatus 100 entered the low-power mode.

A horizontal axis 704 shown on an upper end of the display apparatus 100 may indicate an elapse of time. A start and an end of an arrow 701 marked on the horizontal axis 704 correspond to a point in time where the display apparatus 100 entered the low-power mode and a point in time where the display apparatus 100 was released from the low-power mode, respectively.

Referring to FIG. 7A, a configuration of the power saving mode of the display apparatus 100 may be on. Also, the number of times 703 the display apparatus 100 entered the low-power mode during a first duration or first time period T1 may be 5. The number of times 703 the display apparatus 100 entered the low-power mode during the first duration T1 may be a predefined number (e.g., 4) or more. If it is determined that the number of times 703 the display apparatus 100 entered the low-power mode satisfies the predefined condition, the display apparatus 100 may display, through the user interface 710, a message 711 providing an option to change the configuration of the power saving mode to off.

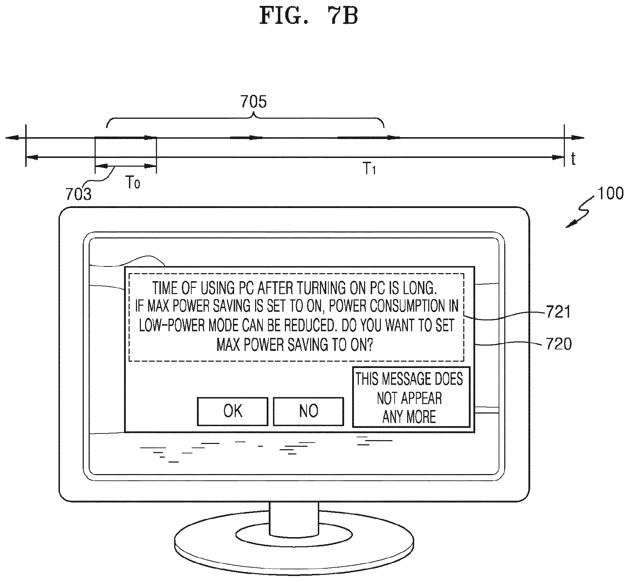

FIG. 7B is a diagram illustrating an example display apparatus 100 providing a user interface 720 based on the number of times the display apparatus 100 entered the low-power mode.

Referring to FIG. 7B, a configuration of the power saving mode of the display apparatus 100 may be off. The number of times 705 the display apparatus 100 entered the low-power mode during the first duration or first time period T1 may be 3. The number of times 705 the display apparatus 100 entered the low-power mode during the first duration T1 may be less than a predefined number (e.g., 4). In this case, the display apparatus 100 may display, through the user interface 720, a message 721 providing an option to change the configuration of the power saving mode to on.

The display apparatus 100 may acquire the number of times the display apparatus 100 maintained the low-power mode for a preset time To 703 or more during the first duration or first time period T1. Referring to FIG. 7B, the preset time T0 703 may, for example, be 10 hours. For example, the display apparatus 100 may determine that the number of times the low-power mode continued for 10 hours or more during the first duration T1 is 2. In this case, the number of times the low-power mode continued for 10 hours or more during the first duration T1 may be less than the predefined number (e.g., 4). If it is determined that the number of times the low-power mode continued for 10 hours or more during the first duration T1 satisfies the predefined condition, the display apparatus 100 may display, through the user interface 720, the message 721 providing an option to change the configuration of the power saving mode to on.

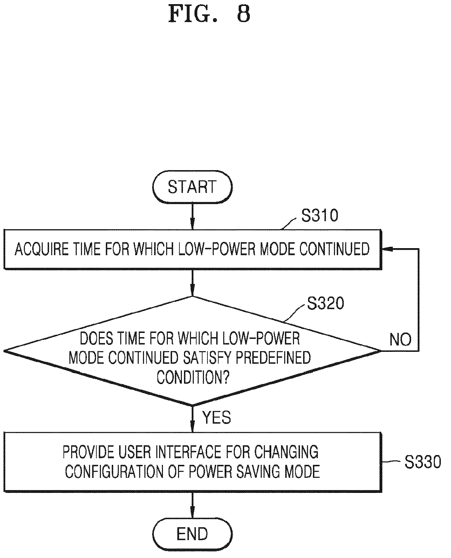

FIG. 8 is a flowchart illustrating an example method of operating the display apparatus 100 providing a user interface based on a time for which the low-power mode continued.

In operation S310, the display apparatus 100 may acquire a time for which the low-power mode continued during the first duration or first time period.

In operation S320, the display apparatus 100 may determine whether the time acquired in operation S310 satisfies a predefined condition.

The display apparatus 100 may determine that the acquired time satisfies the predefined condition in operation S320. In this case, in operation S330, the display apparatus 100 may provide a user interface for changing a configuration of the power saving mode.

Otherwise, the display apparatus 100 may determine that the acquired time does not satisfy the predefined condition in operation S320. In this case, in operation S310, the display apparatus 100 may reacquire a time for which the low-power mode continued during the first duration or first time period.

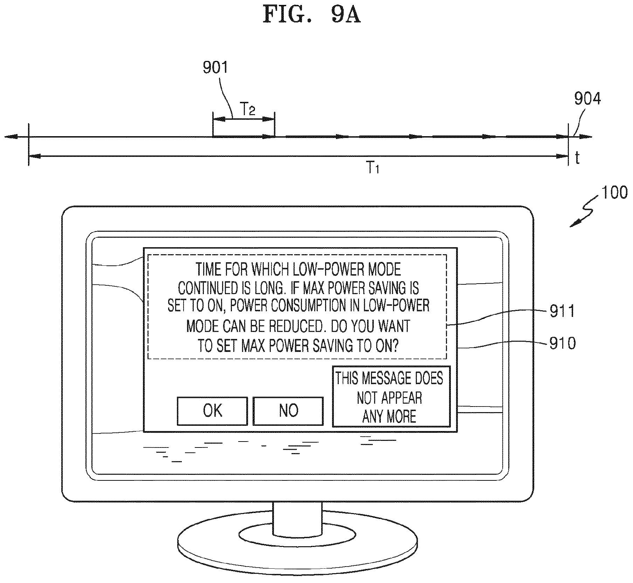

FIG. 9A is a diagram illustrating an example display apparatus 100 providing a user interface 910 based on a time for which the low-power mode continued.

A horizontal axis 904 illustrated on an upper end of the display apparatus 100 may indicate an elapse of time. A start and an end of each of arrows marked on the horizontal axis 904 correspond to a point in time where the display apparatus 100 entered the low-power mode and a point in time where the display apparatus 100 was released from the low-power mode, respectively. A length of each of the arrows of FIG. 9A may indicate a time for which the low-power mode continued.

Referring to FIG. FIG. 9A, a configuration of the power saving mode of the display apparatus 100 may be off. The number of times the display apparatus 100 entered the low-power mode during the first duration or first time period T1 may, for example, be 5. In FIG. 9A, the display apparatus 100 may maintain the low-power mode during a second duration or second time period T2 901. The display apparatus 100 may determine that a total time for which the low-power mode continued during the first duration T1 is 5×T2. The total time 5×T2 for which the low-power mode continued during the first duration or first time period T1 may be a preset time or more. If it is determined that the total time 5×T2 for which the low-power mode continued during the first duration or first time period T1 satisfies the predetermined condition, the display apparatus 100 may display, through the user interface 910, a message 911 providing an option to change the configuration of the power saving mode to on.

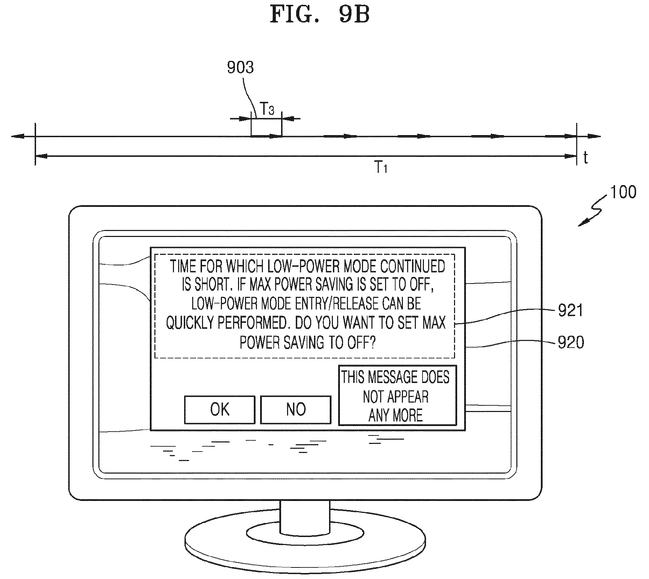

FIG. 9B is a diagram illustrating an example display apparatus 100 providing a user interface 920 based on a time for which the low-power mode continued.

Referring to FIG. FIG. 9B, a configuration of the power saving mode of the display apparatus 100 may be on. The number of times the display apparatus 100 entered the low-power mode during the first duration or first time period T1 may be 5. In FIG. 9B, the display apparatus 100 may maintain the low-power mode during a third duration T3 903. The display apparatus 100 may determine that a total time for which the low-power mode continued during the first duration or first time period T1 is 5×T3. The total time 5×T3 for which the low-power mode continued during the first duration or first time period T1 may be less than a preset time. If it is determined that the total time 5×T3 for which the low-power mode continued during the first duration or first time period T1 satisfies the predetermined condition, the display apparatus 100 may display, through the user interface 920, a message 921 providing an option to change the configuration of the power saving mode to off.

The number of times the display apparatus 100 entered the low-power mode during the first duration or first time period T1 in FIG. 9A may be the same as the number of times the display apparatus 100 entered the low-power mode during the first duration or first time period T1 in FIG. 9B. Compared with the display apparatus 100 shown in FIG. 9A, for the display apparatus 100 shown in FIG. 9B, the total time 5×T3 for which the low-power mode continued during the first duration T1 may be shorter. When the configuration of the power saving mode of the display apparatus 100 shown in FIG. 9B is changed to off, a time for which the display apparatus 100 entered the low-power mode may be reduced.

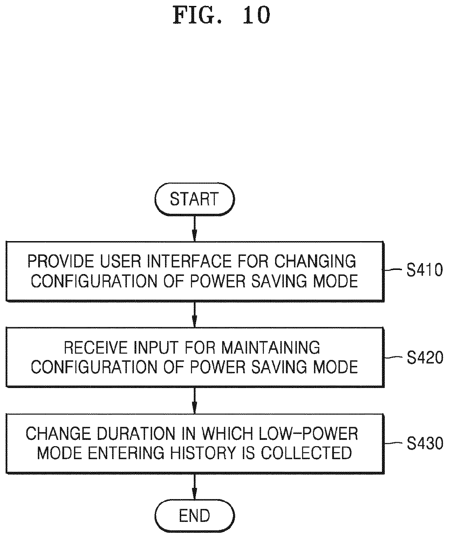

FIG. 10 is a flowchart illustrating an example method of operating the display apparatus 100 providing a user interface.

In operation S410, the display apparatus 100 may provide a user interface for changing a configuration of the power saving mode to a display based on a low-power mode entering history.

In operation S420, the display apparatus 100 may receive an input for maintaining the configuration of the power saving mode.

In operation S430, the display apparatus 100 may change a duration in which the low-power mode entering history is collected based on the input for maintaining the configuration of the power saving mode.

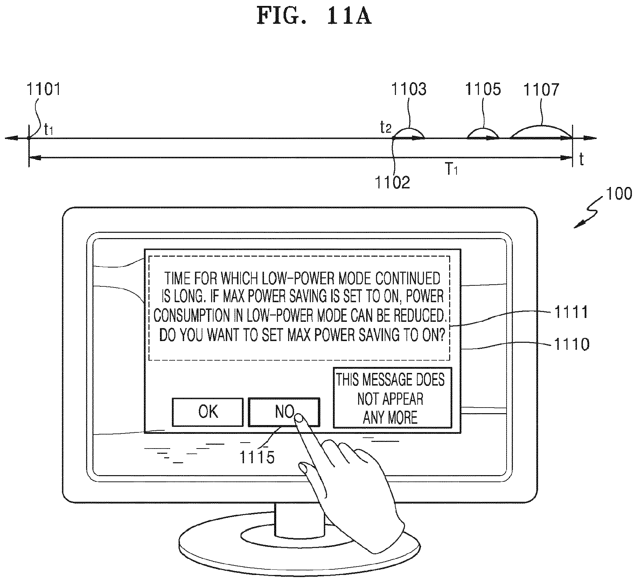

FIGS. 11A through 11C are diagrams illustrating an example display apparatus 100 providing a user interface 1110,1120, or 1130 based on a time for which the low-power mode continued.

The display apparatus 100 of FIG. 11A may acquire a low-power mode entering history during the first duration or first time period T1 from a first point in time t1 1101.

A length of each of arrows 1103,1105, and 1107 illustrated in FIG. 11A may, for example, indicate a time for which the low-power mode continued.

Referring to FIG. 11A, a configuration of the power saving mode of the display apparatus 100 may be on. The number of times the display apparatus 100 entered the low-power mode during the first duration or first time period T1 may be 3. A total time for which the display apparatus 100 maintained the low-power mode during the first duration or first time period T1 may be less than a preset time. If it is determined that the total time for which the display apparatus 100 maintained the low-power mode during the first duration or first time period T1 satisfies the predefined condition, the display apparatus 100 may display, through the user interface 1110, a message 1111 providing an option to change the configuration of the power saving mode to off.

The display apparatus 100 may receive, through an item (e.g. a button) 1115, an input for maintaining the configuration of the power saving mode. If the input for maintaining the configuration of the power saving mode is received, the display apparatus 100 may change a duration in which the low-power mode entering history is collected. For example, the display apparatus 100 may acquire a low-power mode entering history during the first duration or first time period T1 from a second point in time t2 1102.

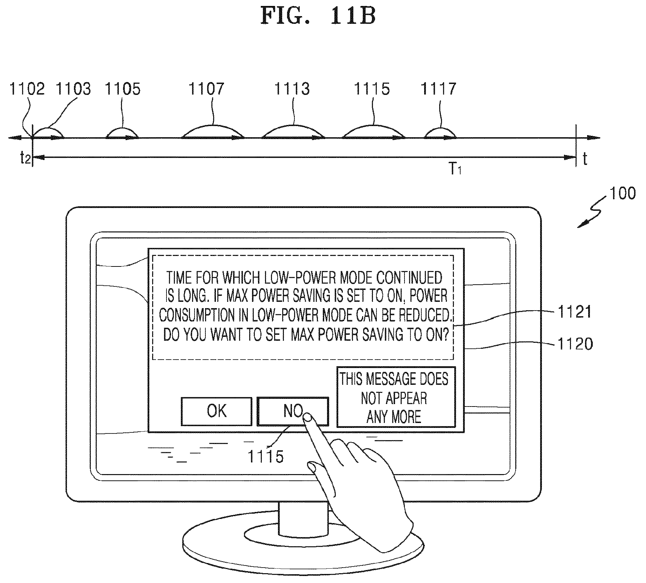

The display apparatus 100 of FIG. 11B may acquire a low-power mode entering history during the first duration or first time period T1 from the second time point t2 1102.

A length of each of arrows 1103,1105,1107,1113,1115, and 1117 shown in FIG. 11B may indicate, for example, a time for which the low-power mode continued.

Referring to FIG. 11B, a configuration of the power saving mode of the display apparatus 100 may be off. The number of times the display apparatus 100 entered the low-power mode during the first duration or first time period T1 may be 6. A total time for which the display apparatus 100 maintained the low-power mode during the first duration or first time period T1 may be the preset time or more. If it is determined that the total time for which the display apparatus 100 maintained the low-power mode during the first duration or first time period T1 satisfies the predefined condition, the display apparatus 100 may display, through the user interface 1120, a message 1121 providing an option to change the configuration of the power saving mode to on.

The display apparatus 100 may receive, through the item (e.g. a button) 1115, an input for maintaining the configuration of the power saving mode. If the input for maintaining the configuration of the power saving mode is received, the display apparatus 100 may change a duration in which the low-power mode entering history is collected. For example, the display apparatus 100 may acquire a low-power mode entering history during a longer duration than the first duration or first time period T1 from the second time point t2 1102.

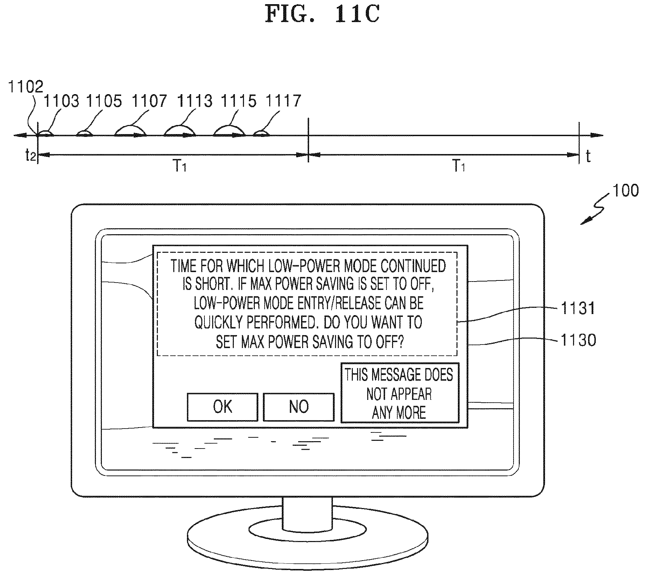

The display apparatus 100 of FIG. 11C may acquire a low-power mode entering history during a duration that is two times the first duration or first time period T1 from the second time point t2 1102.

Referring to FIG. 11C, a configuration of the power saving mode of the display apparatus 100 may be on. The number of times the display apparatus 100 entered the low-power mode during the duration that is two times the first duration or first time period T1 may be 10. The display apparatus 100 may acquire a total time for which the display apparatus 100 maintained the low-power mode during the duration that is two times first duration or first time period T1. The total time for which the display apparatus 100 maintained the low-power mode during the duration that is two times first duration or first time period T1 may be less than a preset time. The display apparatus 100 may display, through the user interface 1130, a message 1131 providing an option to change the configuration of the power saving mode to off.

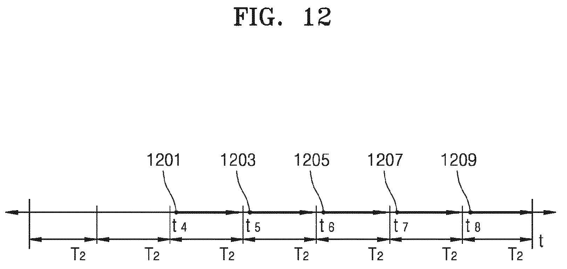

FIG. 12 is a time table illustrating an example display apparatus 100 automatically changing a configuration of the power saving mode based on a time band for which the power saving mode continued.

The display apparatus 100 may automatically change the configuration of the power saving mode based on a time band for which the power saving mode continued. For example, the display apparatus 100 may not display a user interface offering that the configuration of the power saving mode is changed based on a current configuration of the power saving mode of the display apparatus 100.

For example, the display apparatus 100 may entered the low-power mode at time points t4 1201, t5 1203, t6 1205, t7 1207, and t8 1209 during the first duration T1. For example, the first duration T1 may be one week, and each of the time points t4 1201, t5 1203, t6 1205, t7 1207, and t8 1209 may be the same time of one day T2. The display apparatus 100 may set the display apparatus 100 to the power saving mode from a preset time of one day T2 based on a low-power mode entering history.

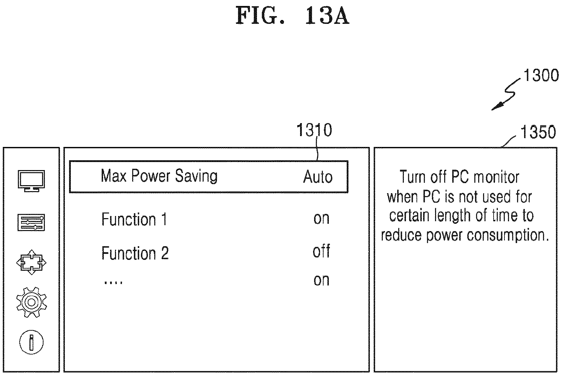

FIG. 13A is a diagram illustrating an example display apparatus 100 providing a user interface 1300 for changing a configuration of the power saving mode.

Referring to FIG. 13A, the display apparatus 100 may display the user interface 1300 by receiving a user input for changing the configuration of the power saving mode. The display apparatus 100 may receive the user input via the user input unit (175 of FIG. 3). For example, the user may push a hard key button placed at a lower end of the display apparatus 100 to display the user interface 1300. The display apparatus 100 may display the user interface 1300 for an on screen display (OSD) function based on the user input.

The display apparatus 100 may provide, through the user interface 1300, an item 1310 for changing the configuration of the power saving mode. Also, the display apparatus 100 may provide, through the user interface 1300, a description 1350 related to the item 1310.

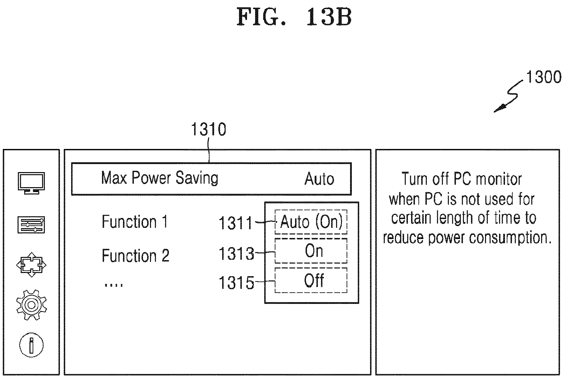

FIG. 13B is a diagram illustrating an example display apparatus 100 providing the user interface 1300 for changing the configuration of the power saving mode.

The display apparatus 100 may provide, through the user interface 1300, the item 1310 for changing the configuration of the power saving mode. The display apparatus 100 may receive, via the user input unit (175 of FIG. 3), an input for selecting the item 1310 for changing the configuration of the power saving mode. In this case, the display apparatus 100 may provide an item 1311 for receiving an input for automatically setting the configuration of the power saving mode, an item 1313 for receiving an input for setting the configuration of the power saving mode to on, and an item 1315 for receiving an input for setting the configuration of the power saving mode to off. The display apparatus 100 may display the word "Auto" and a current configuration of the power saving mode on the item 1311 for receiving an input for automatically setting the configuration of the power saving mode.

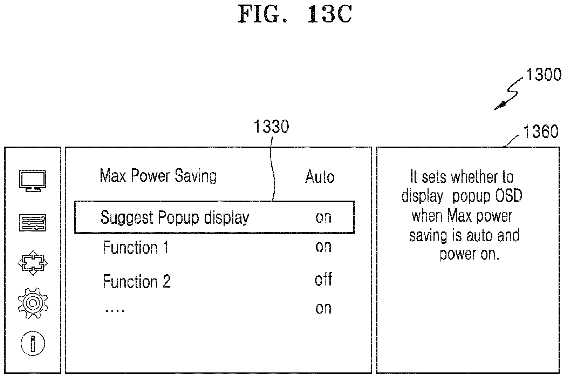

FIG. 13C is a diagram illustrating an example display apparatus 100 providing the user interface 1300 for changing the configuration of the power saving mode.

Referring to FIG. 13C, when a current configuration of the power saving mode is set to "Auto", the display apparatus 100 may set that a user interface offering that the configuration of the power saving mode is changed is not provided. For example, the display apparatus 100 may provide an item 1330 for not providing the user interface offering that the configuration of the power saving mode is changed. The display apparatus 100 may provide a description 1360 related to the item 1330 through the user interface 1300.

According to an example embodiment, when the display apparatus 100 is set such that the user interface offering that the configuration of the power saving mode is changed is not provided, the display apparatus 100 may automatically change the configuration of the power saving mode based on a low-power mode entering history of the display apparatus 100.

According to one or more example embodiments, a user interface may be provided to offer a user an option of whether power consumption of a display apparatus is reduced or the display apparatus is quickly turned on, according to a low-power mode entering history of the display apparatus.

A display method according to the one or more example embodiments may be implemented as computer instructions which may be executed by various computer means, and recorded on a non-transitory computer-readable recording medium. The computer-readable recording medium may include program commands, data files, data structures, or a combination thereof. The program commands recorded on the computer-readable recording medium may be specially designed and constructed for the disclosure or may be known to and usable by one of ordinary skill in a field of computer software. Examples of the non-transitory computer-readable medium include storage media such as magnetic media (e.g., hard discs, floppy discs, or magnetic tapes), optical media (e.g., compact disc-read only memories (CD-ROMs), or digital versatile discs (DVDs)), magneto-optical media (e.g., floptical discs), and hardware devices that are specially configured to store and carry out program commands (e.g., ROMs, RAMs, or flash memories). Examples of the program commands include a high-level language code that may be executed by a computer using an interpreter as well as a machine language code made by a complier.

While the disclosure has been described with reference to example embodiments thereof using specific terms, the examples and terms have merely been used to explain the disclosure and should not be construed as limiting the scope of the disclosure as defined by the claims. The example embodiments should be considered in a descriptive sense only and not for purposes of limitation. Therefore, the scope of the disclosure is defined not by the detailed description but by the appended claims, and all differences within the scope will be construed as being included in the disclosure.

## Claims

1. A display apparatus comprising:
a display; and
a processor configured to provide, on the display, a user interface for changing a configuration of a power saving mode wherein the display apparatus consumes predefined power in a low-power mode, based on a low-power mode entering history of the display apparatus.

2. The display apparatus of claim 1, wherein the processor is further configured to provide the user interface based on at least one of: the number of times the display apparatus entered the low-power mode, and a total time for which the low-power mode continued during a first time period.

3. The display apparatus of claim 1 or 2, wherein the processor is further configured to control the display apparatus to display a message providing an option to change the configuration of the power saving mode on the user interface based on a current configuration of the power saving mode of the display apparatus.

4. The display apparatus of any one of claims 1 to 3, wherein the processor is further configured to control the display apparatus to display the user interface at a point in time corresponding to at least one of: when the display apparatus is released from the low-power mode, and when the display apparatus is turned on.

5. The display apparatus of any one of claims 1 to 4, wherein the processor is further configured to control the display apparatus to display, through the user interface, a message providing an option to change the configuration of the power saving mode to on if the configuration of the power saving mode is off and if the number of times the display apparatus entered the low-power mode during a first time period is less than a preset number of times.

6. The display apparatus of any one of claims 1 to 5, wherein the processor is further configured to control the display apparatus to display, through the user interface, a message providing an option to change the configuration of the power saving mode to off if the configuration of the power saving mode is on and if the number of times the display apparatus entered the low-power mode during a first time period is a preset number of times or more.

7. The display apparatus of any one of claims 1 to 6, wherein the processor is further configured to control the display apparatus to display, through the user interface, a message providing an option to change the configuration of the power saving mode to on if the configuration of the power saving mode is off and if a time for which the low-power mode continued during a first time period is a preset time or more.

8. The display apparatus of any one of claims 1 to 7, wherein the processor is further configured to control the display apparatus to display, through the user interface, a message providing an option to change the configuration of the power saving mode to off if the configuration of the power saving mode is on and if a time for which the low-power mode continued during a first time period is less than a preset time.

9. The display apparatus of any one of claims 1 to 8, wherein the user interface is configured to provide a selectable item for receiving an input for changing the configuration of the power saving mode and a selectable item for receiving an input for maintaining the configuration of the power saving mode.

10. The display apparatus of claim 9, wherein the processor is further configured to control the display apparatus to change a duration in which the low-power mode entering history is collected based on the input for maintaining the configuration of the power saving mode.

11. A display method comprising:
acquiring a low-power mode entering history of a display apparatus; and
providing, on a display, a user interface for changing a configuration of a power saving mode wherein the display apparatus consumes predefined power in a low-power mode, based on the low-power mode entering history.

12. The method of claim 11, wherein the providing of the user interface comprises providing the user interface based on at least one of the number of times the display apparatus entered the low-power mode and a total time for which the low-power mode continued during a first time period.

13. The method of claim 11 or 12, wherein the providing of the user interface comprises controlling the display apparatus to display a message providing an option to change the configuration of the power saving mode on the user interface based on a current configuration of the power saving mode of the display apparatus.

14. The method of any one of claims 11 to 13, wherein the providing of the user interface comprises providing, to the display, the user interface at a point in time corresponding to at least one of when the display apparatus is released from the low-power mode and when the display apparatus is turned on.

15. The method of any one of claims 11 to 14, wherein the providing of the user interface comprises displaying, through the user interface, a message providing an option to change the configuration of the power saving mode to on if the configuration of the power saving mode is off and if the number of times the display apparatus entered the low-power mode during a first time period is less than a preset number of times.
